# EUROPEAN PATENT SPECIFICATION

(11) **EP 0 679 061 B1**
(45) Date of publication and mention of the grant of the patent: **15.03.2000**
(21) Application number: 92924402.8
(22) Date of filing: 05.11.1992
(51) Int. Cl.: A23G 3/30

(54) **HIGH FLAVOR IMPACT NON-TACK CHEWING GUM WITH REDUCED PLASTICIZATION**
NICHTKLEBENDER KAUGUMMI MIT HOHER AROMAINTENSITÄT UND VERMINDERTER PLASTIFIZIERUNG
CHEWING-GUM NON COLLANT A AROME PUISSANT ET PLASTIFICATION REDUITE

(30) Priority: 12.11.1991 US 791039
(43) Date of publication of application: 02.11.1995
(73) Proprietor: WM. WRIGLEY JR. COMPANY, Chicago Illinois 60611 (US)
(72) Inventor: McGREW, Gordon, N., Evanston, IL 60202 (US); CHAPDELAINE, Albert, H., Napperville, IL 60565 (US)
(74) Representative: Baverstock, Michael George Douglas
(86) International application number: US9209705
(87) International publication number: WO9309678

(56) References cited:
- EP-A- 0 265 386
- EP-A- 0 426 428
- US-A- 2 076 112
- US-A- 3 984 574
- US-A- 4 241 090
- US-A- 4 409 244

## Description

The present invention relates to a non-tack chewing gum composition which has high flavor impact and reduced plasticization. The present invention also includes a method of preparing a non-tack chewing gum with high flavor impact and reduced plasticization.

U.S. Patent No. 3,984,574, issued to Comollo, discloses an inherently non-tacky chewing gum which does not adhere to dentures, fillings or natural teeth. This non-tacky or abhesive chewing gum includes a base containing elastomers such as polyisobutylene, polyisoprene, isobutylene-isoprene copolymer or butadiene-styrene copolymer, present in from 5 to 35 per cent; hydrogenated or partially hydrogenated vegetable oils or animal fats, present in from 5 to 50 per cent; mineral adjuvants, present in from 5 to 40 per cent; polyvinyl acetate which may be present in up to 55 per cent; fatty acids which may be present in up to 20 per cent; and mono and diglycerides of fatty acids which may be present in up to 10 per cent, by weight of the base composition.

The foregoing combination of ingredients was found not to adhere to natural teeth, artificial teeth or dentures to any significant degree, without requiring the use of a detackifier. Certain tack-producing components and combinations used in the conventional chewing gums were eliminated from the Comollo composition. Such conventional ingredients included in known chewing gums, but excluded by Comollo, included natural gums such as Chicle or Jelutong, glycerol ester gums, and waxes.

Many conventional chewing gums depend on the use of a detackifier to reduce tackiness. U.S. Patent 4,582,707, issued to Calabro, discloses to the use of carboxymethyl cellulose to alleviate the stickiness caused by hydrogenated starch hydrolysates in chewing gum. U.S. Patent 4,479,969, issued to Bakal et al., discloses the use of lactose-hydrolyzed whey or whey fractions in place of soluble sweetener, emulsifier and plasticizer components to produce softer chewing gums which are not sticky.

U.S. Patent 4,387,108, issued to Koch et al., discloses a non-adhesive chewing gum base containing an elastomer, at least one emulsifier including lecithin or lecithin derivatives, an elastomer solvent including the glycerol ester of partially hydrogenated wood rosin, a non-toxic vinyl polymer and at least one oleaginous plasticizer. U.S. Patent 4,357,355, issued to Koch et al., discloses a non-adhesive bubble gum base containing a high molecular weight vinyl polymer much as polyvinyl acetate or polyvinyl alcohol, together with an emulsifier, in combination with ingredients much as an elastomer, an oleaginous plasticizer, an elastomer solvent, mineral adjuvants, fatty acids and others.

U.S. Patent 4,518,615, issued to Cherukuri et al., discloses a non-adhesive gum base composition including an elastomer, elastomer solvent, polyvinyl acetate, emulsifier, low molecular weight polyethylene, waxes, plasticizer and fillers. U.S. Patent 4,352,822, issued to Cherukuri et al., discloses a synthetic non-styrene butadiene rubber gum base which has non-stick properties, which contains polyisobutylene and a mixture of polyvinyl acetate, triacetin and glyceryl monostearate as film forming-plasticizing agents together with polyterpene, polyethylene, wax, glyceryl monostearate, fatty acid esters and filler.

U.S. Patent 4,352,823, issued to Cherukuri et al., discloses a coextruded chewing gum having a soft core portion which contains polyisobutylene, a combination of plasticizers, a hydrophilic detackifier, polyterpene and other ingredients to impart non-stick properties, optionally polyethylene wax, and spray dried and other flavor ingredients. U.S. Patent 4,271,199, issued to Cherukuri et al., discloses a non-sticky chewing gum formed of gum base, a premixed recrystallized combination of liquid and solid sweeteners which preferably include high fructose syrup alone or together with liquid glucose, corn syrup, sorbitol syrup and/or invert sugar in combination with sucrose or sorbitol and water, and flavors, softeners, and other conventional chewing gum ingredients.

U.S. Patent 4,241,091, issued to Stroz et al., discloses a non-adhesive chewing gum containing gum base, substantially calorie-free sweetener, flavor, water, thickener, filler, softener and a slip agent, the slip agent being alpha-cellulose, texturized vegetable protein, fish protein concentrate, citrus peel, citrus pulp, fruit pulp or mixtures thereof. U.S. Patent 3,974,293, issued to Witzel, discloses a non-adhesive chewing gum composition including a synthetic gum base which contains titanium dioxide, various detackifying agents, viscosity modifying agents, wetting agents, and a soluble phase which includes one or more sweeteners, wetting agents, flavoring materials, coloring, and optionally chlorophyllin or other breath freshener.

EP-0265386 issued to Warner-Lambert Company discloses a mint chewing gum composition having a unique flavor combination which gives the user a significantly enhanced perception of breath freshening which has a flavor composition comprising a blend of (a) a liquid flavor oil selected from spearmint oil, peppermint oil and mixtures thereof including a menthol content of 27 to 36%, (b) a spray dried flavor oil selected from peppermint oil, spearmint oil and mixtures thereof, and (c) spray dried menthol in an amount of 0.2 to 0.75%. Each component plays a vital role in the invention.

EP-0426428 issued to Warner Lambert Company discloses a flavor delivery system comprising a spray-dried emulsion of a flavor component in an amount of 1 to 40%, a sweetener in an amount of 0.5 to 30% and a film forming polymer coating component in an amount of 30 to 80% wherein the sweetenter and film forming polymer coating are combined.

U.S. Patent 3,285,750, issued to Ishida, discloses a chewing gum base containing polyolefin powder or fluorine containing resin powder as an adhesion resistant agent. U.S. Patent 3,255,018, issued to Comollo, discloses an abhesive chewing gum composition containing tannic acid and/or other soluble hydrolyzable tannins. EPO Patent Application 0,067,655 discloses a non-adhesive chewing gum base containing elastomer, oleaginous plasticizer, mineral adjuvants, non-toxic vinyl polymer, emulsifier, and elastomer solvent.

United Kingdom Patent Application GB 2,097,643 discloses a non-stick chewing gum containing a preformed combination of at least two sweeteners which have been recrystallized as a mixture. UK Patent Application GB 2,090,114A discloses a non-styrene butadiene rubber gum base having non-stick properties which includes polyisobutylene, a plasticizer, a hydrophilic-type detackifier, an emulsifier and an anti-tack combination including polyterpene resin, wax, and optionally polyethylene wax. Japan Patent Sho 55-19014 discloses a non-sticking chewing gum containing terpene resin and wax in addition to common chewing gum base ingredients.

Consumers desire chewing gums with high flavor impact. This property is commonly imparted to the chewing gum through the use of increased flavor levels. However, when used in non-tack or reduced-tack products, high flavor levels may cause over-plasticization of the chewing gum base, resulting in loss of non-tack properties. This is not a problem with flavors such as peppermint or cinnamon which have low plasticization properties. However, flavors such as spearmint, wintergreen and certain fruit flavors have higher plasticization tendencies and are currently limited in terms of quantities that can be used in non-tack gum.

Most flavors act as plasticizers for gum base and certain flavors, most notably the applicant has found that wintergreen (methyl salicylate), is an especially strong plasticizers. While this is not a serious problem for most gum products, reduced-tack and non-tack chewing gums can lose their non-tack properties when excessively plasticized. Non-tack gums are commonly marketed to consumers with dentures or other dental appliances which prevent the wearer from chewing conventional gums due to excessive adhesion.

It has been discovered by the inventors that the tendency of such flavoring agents to plasticize the non-tack chewing gum is greatly reduced when the flavoring agent is passed through a spray drying process before being added to the non-tack chewing gum. Accordingly, a wintergreen flavoring agent, which is first spray dried, can be added to a non-tack chewing gum in greater quantities than a corresponding wintergreen flavoring agent which has not been spray dried, before the gum base becomes over-plasticized and loses its non-tack properties. In accordance with the invention, it is now possible to provide a non-tack chewing gum which is flavored with wintergreen, and which also has high flavor impact.

It is a feature and advantage of the invention to provide an abhesive wintergreen flavored chewing gum which has high flavor impact and which retains its non-tack properties during chewing not withstanding that it is free of detackifier.

It is also a feature and advantage of one aspect of the invention to provide a method of preparing an abhesive high flavor impact chewing gum which is flavored with wintergreen and which retains its abhesive characteristics before and during chewing not withstanding that it is free of detackifier.

The foregoing and other features and advantages will become further apparent from the following detailed description of the presently preferred embodiments, when read in conjunction with the accompanying examples. It should be understood that the detailed description and examples are illustrative rather than limitative, the scope of the present invention being defined by the appended claims.

According to one aspect of the present invention there is provided a wintergreen flavoured abhesive, high flavor impact chewing gum which is free of detackifier, comprising: from 5 to 95 weight percent of a nontack chewing gum base; from 5 to 95 weight percent of a water soluble bulk portion including one or more sweeteners; and a spray dried wintergreen flavor ingredient present in an amount sufficient to impart an active flavor level of from 0.10 to 1.50 wt % of the chewing gum; wherein the non-tack chewing gum base comprises, based on the weight of the gum base: from 10 to 55 wt. % polyvinyl acetate; from 15 to 45 wt. % of an elastomer selected from the group consisting of polyisobutylene, butyl rubber, polyisoprene, isobutyleneisoprene copolymer, butadiene-styrene copolymer, and combinations thereof;from 5 to 50 wt. % of a softener selected from the group consisting of hydrogenated vegetable oils, partially hydrogenated vegetable oils, animal fats, hydrogenated and partially hydrogenated animal fats, and combinations thereof; and from 5 to 40 wt. % of a mineral adjuvant selected from the group consisting of calcium carbonate, talc, tricalcium phosphate, and combinations thereof.

According to a further aspect of the present invention there is provided a method for preparing a wintergreen flavoured adhesive, high flavor impact chewing gum which is free of detackifier, comprising the steps of: spray drying a flavor ingredient comprising a wintergreen flavoring agent; preparing a non-tack chewing gum base; providing one or more sweeteners; and thoroughly mixing the spray dried flavour ingredient, the non-tack chewing gum base and the one or more sweeteners together to form an abhesive chewing gum mass comprising from 5 to 95 weight percent of the non-tack chewing gum base, from 5 to 95 weight percent of one or more sweeteners, and a sufficient amount of the spray dried flavour ingredient to impart an active flavour level of from 0.10 to 1.50 weight percent of the chewing gum; wherein the non-tack chewing gum base comprises, based on the weight of the chewing gum base: from 10 to 55 weight percent polyvinyl acetate; from 15 to 45 weight percent of an elastomer selected from the group consisting of polyisobutylene, butyl rubber, polyisoprene, isobutyleneisoprene copolymer, butadiene-styrene copolymer, and combinations thereof; from 5 to 50 weight percent of a softener selected from the group consisting of hydrogenated vegetable oils, partially hydrogenated vegetable oils, animal fats, hydrogenated and partially hydrogenated animal fats, and combinations thereof; and from 5 to 40 weight percent of a mineral adjuvant selected from the group consisting of calcium carbonate, talc, tricalcium phosphate, and combinations thereof.

In accordance with the present invention, a quantity of a wintergreen flavour ingredient, which typically acts as a strong plasticizer, is first spray dried, causing a reduction in its plasticization tendencies. Other flavour ingredients may also be used in the gum. However, if they are spearmint oil, citrus oil and/or food acceptable aliphatic ester, or any sensorially pleasing combination thereof then preferably they are also spray dried. The term "citrus oil is intended to include, for instance, orange oil, lemon oil, lime oil, tangerine oil, grapefruit oil, and combinations thereof. The term "food acceptable aliphatic ester" is intended to include, for instance, amyl acetate (banana flavor), isoamyl acetate, isobutyl acetate, ethyl acetate, ethyl butyrate, ethyl propionate, and combinations thereof. The preferred food acceptable aliphatic esters are those having a lower molecular weight, such as lower alkyl esters of lower aliphatic (C₁ through C₈) alcohols and acids having molecular weights less than about 250.

The wintergreen flavor ingredient may be combined with other, less strongly plasticizing flavor ingredients or may be used alone. Such combination of flavor ingredients may be accomplished either before or after spray drying. If the flavor ingredients are combined before spray drying, then the combination is spray dried.

The wintergreen flavor ingredient is spray dried with a food acceptable dry carrier such as maltodextrin, gum arabic, cellulose derivatives, etc. Typically, the spray dried ingredient will contain from 5 to 50 weight per cent wintergreen flavor, with the remainder being the dry carrier. The preferred spray drying equipment is a standard spray dryer with a nozzle atomizer. After spray drying, the flavor ingredient is in the form of a powder.

The spray dried wintergreen flavor ingredient is now ready to be added to a non-tack chewing gum composition. In accordance with the invention, the spray dried wintergreen flavor ingredient is added in a quantity sufficient to cause the chewing gum to have an excellent flavor impact when chewed by the consumer. The actual amount of spray dried wintergreen flavor required to accomplish this objective depends on several factors. These include the level of flavor impact desired, the level of optional liquid flavor used, the active level of flavor in the spray dried component, the potency of the flavor and the base level in the gum.

The level of spray dried flavor employed will be greatly influenced by the foregoing considerations. Of special importance is the active level of wintergreen flavor in the spray dried wintergreen flavor ingredient which may range from less than 5 to more than 50 per cent by weight of the spray dried flavor ingredient. The active flavor level in the chewing gum which is added in spray dried form will typically range from 0.10 to 1.50 per cent by weight of the chewing gum, more preferably from 0.30 to 1.00 per cent by weight of the chewing gum and most preferably from 0.40 to 0.80 per cent by weight of the chewing gum. The actual usage levels of spray dried flavor ingredient will, of course, be higher to account for the inactive carrier in the spray dried flavor ingredient.

A liquid flavor component may optionally be employed along with the spray dried wintergreen flavor in the present invention. This liquid component may be identical with the flavor used in the spray dried component. Or it may be a complementary flavor, preferably low in or devoid of strongly plasticizing flavor components which are instead incorporated into the spray dried flavor. If a liquid flavor component is used, it may be used at any desired level as long as it does not over plasticize the base. After the liquid flavor level has been optimized, the spray-dried flavor level can be adjusted to provide the desired flavor impact.

Typically, the liquid flavor (if used) will be present at a level of 0.05 to 1.5% by weight of the chewing gum. Preferably, a level below 1.0% will be used. Most preferably the level will be below 0.80%. It is critical that the level of liquid flavor which is employed be below the level which results in over plasticization as evidenced by significant tack increases in the finished gum.

The present invention contemplates the use of any abhesive or non-tack chewing gum base and chewing gum composition. An abhesive gun base and chewing gum which are particularly suitable for use with the invention are described in Comollo U.S. Patent 3,984,574. The chewing gun base of Comollo includes from 5 to 45 weight per cent of an elastomer such as polyisobutylene, polyisoprene, isobutylene-isoprene copolymer or butadiene-styrene copolymer; from 5 to 50 weight per cent of hydrogenated or partially hydrogenated vegetable oils or animal fats from 5 to 40 weight per cent mineral adjuvants; from 0 to 55 weight per cent polyvinyl acetate; from 0 to 20 weight per cent fatty acids; and from 0 to 10 weight per cent mono and diglycerides of fatty acids.

The preferred elastomer for use in a Comollo-type base is a mixture of polyisobutylene and butyl rubber in a ratio of about three parts by weight polyisobutylene per two parts by weight butyl rubber. Preferably, the elastomer mixture constitutes from 15 to 40 weight per cent of the gum base, most preferably from 20 to 30 weight per cent of the gum base.

A wide range of hydrogenated or partially hydrogenated vegetable oils may be utilized in a Comollo-type non-tack gum base; for example, soybean, cottonseed, corn, peanut, and palm oil, alone or in combination. Preferably, the hydrogenated and partially hydrogenated vegetable oils and/or animal fats constitute from 20 to 50 weight per cent of the abhesive chewing gum base, most preferably from 30 to 40 weight per cent of the gum base.

A wide variety of mineral adjuvants may be used in formulating a Comollo-type non-tack chewing gum base. Preferred mineral adjuvants are calcium carbonate, talc, and tricalcium phosphate, alone or in combination. Preferably, the mineral adjuvants constitute from 5 to 35 weight per cent of the abhesive gum base, most preferably from 10 to 20 weight per cent of the gum base.

The Comollo-type gum base can also include polyvinyl acetate. When used, polyvinylacetate preferably constitutes from 10 to 35 weight per cent of the gum base, most preferably from 15 to 25 weight per cent of the base.

As noted in the background section above, the Comollo-type gum base is substantially free of natural gums, glycerol ester gums and waxes. By keeping these adhesion-producing ingredients out of the abhesive gum base, the need for one or more detackifiers in the chewing gum is alleviated. However, the spray-dried flavors of the invention may also be used in conjunction with other non-tack chewing gums, including those which contain adhesion-producing ingredients.

Another non-tack gum base which is suitable for use with the invention contains from 10 to 40 weight per cent of a non-styrene butadiene rubber elastomer, 10 to 40 weight per cent fats and oils, from 0 to 15 weight per cent waxes, from 15 to 40 weight per cent polyvinyl acetate, from 2 to 10 weight per cent emulsifier, from 6 to 25 weight per cent terpene resin and from 5 to 35 weight per cent filler. The elastomers may include polyisobutylene, butyl rubber, and combinations thereof. Preferably, the elastomer will constitute from 15 to 25 weight per cent of the gum base, most preferably about 22 weight per cent of the gum base.

The fats and oils useful in the gum base include one or more of fully or partially hydrogenated vegetable oils, such as soybean oil, cottonseed oil, corn oil, peanut oil and palm oil, as well as hydrogenated or partially hydrogenated animal fats such as tallow or lard. Preferably, the fats and oils constitute from 20 to 30 weight of the gum base, most preferably about 23 weight per cent of the gum base.

Waxes include natural waxes, petroleum waxes including polyethylene waxes, paraffin waxes and microcrystalline waxes with melting points higher than 80°C, alone or in combination. Preferably, the waxes constitute from 3 to 10 weight per cent of the gum base, most preferably about 5 weight per cent of the gum base.

The fillers useful in the gum base include calcium carbonate, talc, and mixtures thereof. Preferably, the fillers constitute from 10 to 25 weight per cent of the gum base, most preferably about 11 weight per cent of the gum base.

For purposes of the present invention, the polyvinyl acetate preferably constitutes from 15 to 30 weight per cent of the gum base, most preferably about 24 weight per cent of the gum base.

Terpene resins include polymers of alpha-pinene, beta-pinene, limonene and mixtures thereof. The terpene resins preferably constitute from 8 to 18 weight per cent of the gum base, most preferably about 10 weight per cent of the gum base.

The preferred emulsifier is glycerol monostearate, in amounts from 3 to 8 per cent by weight of the gum base. Most preferably, the emulsifier constitutes about 5 per cent by weight of the gum base.

In addition to flavoring agents, a chewing gum composition generally includes a water soluble bulk portion and a water insoluble chewing gum base portion. The water soluble portion dissipates over a period of time during chewing. The gum base portion is retained in the mouth throughout the chewing process.

Non-tack gum bases also include standard bases other than those discussed above. Such standard gum bases often utilize detackifiers to reduce the tack caused by adhesion producing ingredients. Detackifiers include, but are not limited to, carboxymethyl cellulose, alpha-cellulose, whey or whey fractions, lecithin or lecithin derivatives, polyterpenes, vegetable or fish proteins, citrus peel, citrus pulp, fruit pulp, polyolefin powder, fluorine containing resin powder, and combinations thereof. To impart non-tack properties to a standard gum base requires the addition of anywhere from 0.1 to 10 per cent detackifier by weight of the gum base. The preferred amounts of detackifier vary widely depending on the composition of the gum base and the type of detackifier.

Standard gum bases generally contain elastomers, resins, fats, oils, waxes, softeners and inorganic fillers. The elastomers may include polyisobutylene, isobutylene-isoprene copolymer, styrene butadiene rubber and natural latexes such as chicle. The resins may include polyvinyl acetate and terpene resins. Low molecular weight polyvinyl acetate is a preferred resin. Fats and oils may include animal fats such as lard and tallow, vegetable oils such as soybean and cottonseed oils, hydrogenated and partially hydrogenated vegetable oils, and cocoa butter. Commonly used waxes include petroleum waxes such as paraffin and microcrystalline wax, natural waxes such as beeswax, candellia, carnauba and polyethylene wax. The present invention contemplates the use of any commercially acceptable chewing gum base.

Standard gum bases typically also include a filler component such as calcium carbonate, magnesium carbonate, talc, dicalcium phosphate and the like; softeners, including glycerol monostearate and glycerol triacetate; and optional ingredients such as anti-oxidants, colors and emulsifiers.

The gum base constitutes from 5 to 95% by weight of the chewing gum composition, more typically from 10 to 50% by weight of the chewing gum, and most commonly from 20 to 30% by weight of the chewing gum.

The water soluble portion of the chewing gum may include softeners, bulk sweeteners, high intensity sweeteners, flavoring agents and combinations thereof. Softeners are added to the chewing gum in order to optimize the chewability and mouth feel of the gum. The softeners, which are also known as plasticizers or plasticizing agents, generally constitute from 0.5 to 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners constitute from 5 to 95% by weight of the chewing gum, more typically from 20 to 80% by weight of the chewing gum and most commonly from 30 to 60% by weight of the chewing gum. Bulk sweeteners may include both sugar and sugarless sweeteners and components. Sugar sweeteners may include saccharide containing components including but not limited to sucrose, dextrose, maltose, dextrin, dried invert sugar, fructose, levulose, galactose, corn syrup solids, and the like, alone or in combination. Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolysates, maltitol, and the like, alone or in combination.

High intensity sweeteners may also be present and are commonly used with sugarless sweeteners. When used, high intensity sweeteners typically constitute from 0.001 to 5% by weight of the chewing gum, preferably from 0.01 to 1% by weight of the chewing gum. Typically, high intensity sweeteners are at least 20 times sweeter than sucrose. These may include but are not limited to sucralose, aspartame, salts of acesulfame, alitame, saccharin and its salts, cyclamic acid and its salts, glycyrrhizin, dihydrochalcones, thaumatin, monellin, and the like, alone or in combination.

Combinations of sugar and/or sugarless sweeteners may be used in chewing gum. The sweetener may also function in the chewing gum in whole or in part as a water soluble bulking agent. Additionally, the softener may also provide additional sweetness such as with aqueous sugar or alditol solutions.

In accordance with the invention, the spray dried flavor ingredient should generally be present in the chewing gum in an amount effective to produce a desired high flavor impact upon chewing. In addition to spray dried wintergreen other spray dried flavoring agents may be included for example, spearmint oil, citrus oils, food acceptable aliphatic esters, and combinations thereof. Other natural and artificial flavoring agents and components may also be used in addition to the spray dried flavor ingredient in the invention.

Optional ingredients such as colors, emulsifiers, pharmaceutical agents and additional flavoring agents may also be included in chewing gum.

Chewing gum is generally manufactured by sequentially adding the various chewing gum ingredients to any commercially available mixer known in the art. After the ingredients have been thoroughly mixed, the gum mass is discharged from the mixer and shaped into the desired form such as by rolling into sheets and cutting into sticks, extruding into chunks, or casting into pellets. Generally, the ingredients are mixed by first melting the abhesive gum base and adding it to the running mixer. The gum base may alternatively be melted in the mixer. Color and emulsifiers can be added at this time.

A softener such as glycerin can be added next along with syrup and part of the bulk portion. Further parts of the bulk portion may then be added to the mixer. In accordance with the invention, the spray dried flavor ingredient, and optional additional flavoring agents, are typically added with the final part of the bulk portion. The entire mixing process typically takes from five to fifteen minutes, although longer mixing times are sometimes required. Those skilled in the art will recognize that variations of this mixing procedure, or other mixing procedures, may be followed.

A wide range of changes and modifications to the embodiments of the invention described above will be apparent to persons skilled in the art. The following examples are not to be construed as imposing limitations on the invention, but are included merely to illustrate preferred embodiments.

### 〈COMPARATIVE〉 EXAMPLE 1

A non-tack wintergreen flavored gum was prepared according to the following formula:

| Component | Weight Per Cent |
|---|---|
| Base (Comollo type from U.S. 3,984,974) | 22.0 |
| Corn Syrup | 12.0 |
| Dextrose Monohydrate | 8.0 |
| Glycerin | 1.0 |
| Sugar | 54.7755 |
| Sorbitol | 0.9 |
| Wintergreen flavor (Methyl Salicylate) | 1.275 |
| Takasago cooling agent | 0.0495 |
| TOTAL | 100.0 |

After mixing, the chewing gum was rolled and cut into uniform sticks. Next, the chewing gum was sensory tested. The chewing gun was found to have a desirably high flavor impact but was also found to be excessively tacky for a non-tack product.

### EXAMPLE 2

A quantity of wintergreen flavor was spray dried with a malto-dextrin carrier in a ratio of one part by weight wintergreen flavor per four parts by weight carrier. Standard spray drying techniques and equipment were used.

The spray dried wintergreen flavor was used in chewing gum made according to the following formula.

| Component | Weight Per Cent |
|---|---|
| Base (Comollo type from U.S. 3,984,974) | 22.0 |
| Corn Syrup | 12.0 |
| Dextrose Monohydrate | 8.0 |
| Glycerin | 1.0 |
| Sugar | 52.2230 |
| Sorbitol | 0.9 |
| Wintergreen flavor | 0.6375 |
| Spray dried wintergreen flavor | 3.19 |
| Takasago cooling agent | 0.0495 |
| TOTAL | 100.0 |

The chewing gum product of Example 2 was rolled and cut into sticks as in Example 1. The chewing gums of Examples 1 and 2 were subjected to in-house sensory testing. Twenty-two trained panelists chewed each gum (blind, in random order) for three minutes. Each selected the gum which had the highest flavor peak and the one which had the fastest initial flavor release. Ten out of the 22 panelists selected the gum of Example 2 to have The fastest initial flavor release and 13 out of 22 selected the same gun as having the highest peak. Neither result was statistically significant and both gums were considered to be at parity for the two properties, each having satisfactory flavor release and flavor impact.

Thirty-two consumers with dental appliances and who experienced tack problems with conventional chewing gums, were recruited to judge the tackiness of the two products. Each consumer rated both products at the first bite and after two, five, ten, twelve and fifteen minutes of chewing, using the following scale:

| Description | Rating |
|---|---|
| Sticks severely | 4 |
| Sticks moderately | 3 |
| Sticks slightly | 2 |
| Does not stick at all | 1 |

After chewing, each consumer's dental appliance was examined by a dentist who rated the quantity of gum residue and the degree of stickiness on a similar four-point scale. The average results of the consumers' ratings, and the results of the dentist's ratings, are presented below.

| Panelists' Tack Ratings | Example 1 | Example 2 | % Confidence |
|---|---|---|---|
| First bite | 1.03 | 1.09 | N.S. |
| Two minutes | 1.28 | 1.09 | 97 |
| Five minutes | 1.38 | 1.13 | 91 |
| Ten minutes | 1.41 | 1.31 | N.S. |
| Twelve minutes | 1.47 | 1.25 | 91 |
| Fifteen minutes | 1.42 | 1.28 | N.S. |

| Dentists' Tack Ratings | | | |
|---|---|---|---|
| Quantity of residue | 1.22 | 1.00 | 89 |
| Degree of sticking | 1.44 | 1.38 | N.S. |

The "% Confidence" is the statistical certainty that the difference between two average ratings is not due to chance. For example, after two minutes, there was a 97% confidence that the gum of Example 2 was less tacky than the gum of Example 1. "N.S." stands for not significant, indicating that the % confidence was less than 85%.

Overall, considering the consistently better scores for the gum of Example 2 than for the gum of Example 1, we are highly confident that the gum of Example 2 is less tacky than the gum of Example 1.

While the embodiments of the invention disclosed herein are presently considered to be preferred, various modifications and improvements can be made without departing from the spirit and scope of the invention. The scope of the invention is indicated in the appended claims.

## Claims

1. A wintergreen flavoured abhesive, high flavor impact chewing gum which is free of detackifier, comprising:
from 5 to 95 weight percent of a nontack chewing gum base;
from 5 to 95 weight percent of a water soluble bulk portion including one or more sweeteners; and
spray dried wintergreen flavor ingredient present in an amount sufficient to impart an active flavor level of from 0.10 to 1.50 wt % of the chewing gum,
wherein the non-tack chewing gum base comprises, based on the weight of the gum base:
from 10 to 55 wt. % polyvinyl acetate;
from 15 to 45 wt. % of an elastomer selected from the group consisting of polyisobutylene, butyl rubber, polyisoprene, isobutyleneisoprene copolymer, butadiene-styrene copolymer, and combinations thereof;
from 5 to 50 wt. % of a softener selected from the group consisting of hydrogenated vegetable oils, partially hydrogenated vegetable oils, animal fats, hydrogenated and partially hydrogenated animal fats, and combinations thereof; and
from 5 to 40 wt. % of a mineral adjuvant selected from the group consisting of calcium carbonate, talc, tricalcium phosphate, and combinations thereof.

2. A chewing gum as claimed in claim 1, wherein the elastomer comprises a mixture of polyisobutylene and butyl rubber in a ratio of about three parts by weight polyisobutylene per two parts by weight butyl rubber.

3. A chewing gum as claimed in claim 1 or claim 2, wherein the non-tack base further comprises one or more fatty acids present in an amount of up to 20% by weight of the non-tack chewing gum base.

4. A chewing gum as claimed in any one of claims 1 to 3, wherein the non-tack base further comprises glycerides of fatty acids present in an amount of up to 10 weight per cent of the non-tack chewing gum base, and selected from the group consisting of monoglycerides, diglycerides, and combinations thereof.

5. A chewing gum as claimed in any one of claims 1 to 4, wherein the non-tack chewing gum base further comprises:
from 2 to 10 wt% emulsifier; and
from 6 to 25 wt%terpene resin.

6. A chewing gum as claimed in claim 5, wherein the emulsifier comprises glycerol monostearate.

7. A chewing gum as claimed in claim 5 or claim 6, wherein the terpene is selected from the group consisting of alpha-terpene, beta-terpene, limonene, and combinations thereof.

8. A chewing gum as claimed in any preceding claim, wherein the non-tack chewing gum base further comprises up to 15 wt% of a wax selected from the group consisting of natural waxes, petroleum waxes, paraffin waxes, microcrystalline waxes, and combination thereof.

9. A chewing gum as claimed in any previous claim, wherein the bulk portion comprises one or more sugar sweeteners selected from the group consisting of sucrose, dextrose, maltose, dextrin, dried invert sugar, fructose, levulose, galactose, corn syrup solids, and combinations thereof.

10. A chewing gum as claimed in any one of claims 1 to 8, wherein the bulk portion comprises one or more sugarless sweeteners selected from the group consisting of sorbitol, mannitol, xylitol, hydrogenated starch hydrolysates, maltitol, and combinations thereof.

11. A chewing gum as claimed in any one of claims 1 to 8, wherein the bulk portion comprises one or more high intensity sweeteners selected from the group consisting of sucralose®, aspartame, salts of acesulfame, alitame, saccharin and its salts, cyclamic acid and its salts, glycyrrhizin, dihydrochalcones, thaumatin, monellin, and combinations thereof.

12. A chewing gum as claimed in any one of claims 1 to 11, wherein the bulk portion further comprises a softener selected from the group consisting of glycerin, lecithin, and combinations thereof.

13. A chewing gum as claimed in any previous claim, wherein the spray dried wintergreen is present in an amount sufficient to provide an active flavor level of from 0.30 to 1.00% by weight of the chewing gum.

14. A chewing gum as claimed in any previous claim, wherein the spray dried wintergreen ingredient is present in an amount sufficient to provide an active flavor level of from 0.40 to 0.80 per cent by weight of the chewing gum.

15. A chewing gum as claimed in any previous claim, further comprising one or more liquid flavoring agents present in an amount of from 0.05 to 1.5 weight percent of the chewing gum, in addition to the spray dried flavor ingredient.

16. A method for preparing a wintergreen flavoured abhesive, high flavor impact chewing gum which is free of detackifier, comprising the steps of:
spray drying a flavor ingredient comprising a wintergreen flavoring agent;
preparing a non-tack chewing gum base;
providing one or more sweeteners; and
thoroughly mixing the spray dried flavor ingredient, the non-tack chewing gum base and the one or more sweeteners together to form an abhesive chewing gum mass comprising from 5 to 95 weight percent of the non-tack chewing gum base, from 5 to 95 weight percent of one or more sweeteners, and a sufficient amount of the spray dried flavor ingredient to impart an active flavor level of from 0.10 to 1.50 weight percent of the chewing gum;
wherein the non-tack chewing gum base comprises, based on the weight of the chewing gum base:
from 10 to 55 weight percent polyvinyl acetate; from 15 to 45 weight percent of an elastomer selected from the group consisting of polyisobutylene, butyl rubber, polyisoprene, isobutyleneisoprene copolymer, butadiene-styrene copolymer, and combinations thereof;
from 5 to 50 weight percent of a softener selected from the group consisting of hydrogenated vegetable oils, partially hydrogenated vegetable oils, animal fats, hydrogenated and partially hydrogenated animal fats, and combinations thereof;
and from 5 to 40 weight percent of a mineral adjuvant selected from the group consisting of calcium carbonate, talc, tricalcium phosphate, and combinations thereof.

17. A method as claimed in claim 16 wherein the sweetener is selected from the group consisting of sugar sweeteners, sugarless sweeteners, high intensity sweeteners, and combinations thereof.

18. A method as claimed in claim 16 or claim 17, further comprising the steps of providing a second flavoring agent in an amount of from 0.50 to 1.5 weight percent of the chewing gum, and thoroughly mixing the second flavoring agent with the spray dried flavor ingredient, the non-tack chewing gum base and the one or more sweeteners.

## Patentansprüche

1. Abhäsiver Kaugummi mit Wintergrünaroma und hoher Aromaintensität, welcher frei von Antiklebemittel ist, umfassend:
5 bis 95 Gew.-% einer nichtklebenden Kaugummibase;
5 bis 95 Gew.-% eines wasserlöslichen Füllstoffanteils, der ein oder mehrere Süßungsmittel einschließt; und
sprühgetrockneten Wintergrünaroma-Bestandteil, der in einer Menge vorhanden ist, die ausreicht, um einen aktiven Aromagehalt von 0,10 bis 1,50 Gew.-% des Kaugummis zu verleihen,
wobei die nichtklebende Kaugummibase, bezogen auf das Gewicht der Gummibase, umfaßt:
10 bis 55 Gew.-% Polyvinylacetat;
15 bis 45 Gew.-% eines Elastomers, ausgewählt aus der Gruppe bestehend aus Polyisobutylen, Butylkautschuk, Polyisopren, Isobutylen-Isopren-Copolymer, Butadien-Styrol-Copolymer und Kombinationen davon;
5 bis 50 Gew.-% eines Weichmachers, ausgewählt aus der Gruppe bestehend aus hydrierten Pflanzenölen, teilweise hydrierten Pflanzenölen, tierischen Fetten, hydrierten und teilweise hydrierten tierischen Fetten und Kombinationen davon; und
5 bis 40 Gew.-% eines mineralischen Zusatzstoffes, ausgewählt aus der Gruppe bestehend aus Calciumcarbonat, Talk, Tricalciumphosphat und Kombinationen davon.

2. Kaugummi nach Anspruch 1, wobei das Elastomer ein Gemisch aus Polyisobutylen und Butylkautschuk in einem Verhältnis von ungefähr drei Gewichtsteilen Polyisobutylen pro zwei Gewichtsteile Butylkautschuk umfaßt.

3. Kaugummi nach Anspruch 1 oder Anspruch 2, wobei die nichtklebende Base außerdem eine oder mehrere Fettsäuren umfaßt, die in einer Menge von bis zu 20 Gew.-% der nichtklebenden Kaugummibase vorhanden sind.

4. Kaugummi nach einem der Ansprüche 1 bis 3, wobei die nichtklebende Base außerdem Glyceride von Fettsäuren umfaßt, die in einer Menge von bis zu 10 Gew.-% der nichtklebenden Kaugummibase vorhanden sind und ausgewählt sind aus der Gruppe bestehend aus Monoglyceriden, Diglyceriden und Kombinationen davon.

5. Kaugummi nach einem der Ansprüche 1 bis 4, wobei die nichtklebende Kaugummibase außerdem umfaßt:
2 bis 10 Gew.-% Emulgator; und
6 bis 25 Gew.-% Terpenharz.

6. Kaugummi nach Anspruch 5, wobei der Emulgator Glycerinmonostearat umfaßt.

7. Kaugummi nach Anspruch 5 oder Anspruch 6, wobei das Terpen ausgewählt ist aus der Gruppe bestehend aus alpha-Terpen, beta-Terpen, Limonen und Kombinationen davon.

8. Kaugummi nach einem der vorangehenden Ansprüche, wobei die nichtklebende Kaugummibase außerdem bis zu 15 Gew.-% eines Wachses umfaßt, das ausgewählt ist aus der Gruppe bestehend aus natürlichen Wachsen, Erdölwachsen, Paraffinwachsen, mikrokristallinen Wachsen und Kombinationen davon.

9. Kaugummi nach einem der vorangehenden Ansprüche, wobei der Füllstoffanteil ein oder mehrere Zucker-Süßungsmittel umfaßt, ausgewählt aus der Gruppe bestehend aus Sucrose, Dextrose, Maltose, Dextrin, getrocknetem Invertzucker, Fructose, Lävulose, Galactose, Maisstärkesirup-Feststoffe und Kombinationen davon.

10. Kaugummi nach einem der Ansprüche 1 bis 8, wobei der Füllstoffanteil ein oder mehrere zuckerfreie Süßungsmittel umfaßt, ausgewählt aus der Gruppe bestehend aus Sorbit, Mannit, Xylit, hydrierten Stärkehydrolysaten, Maltit und Kombinationen davon.

11. Kaugummi nach einem der Ansprüche 1 bis 8, wobei der Füllstoffanteil ein oder mehrere hochwirksame Süßungsmittel umfaßt, ausgewählt aus der Gruppe bestehend aus Sucralose®, Aspartam, Salzen von Acesulfam, Alitam, Saccharin und seinen Salzen, Cyclaminsäure und ihren Salzen, Glycyrrhizin, Dihydrochalkonen, Thaumatin, Monellin und Kombinationen davon.

12. Kaugummi nach einem der Ansprüche 1 bis 11, wobei der Füllstoffanteil außerdem einen Weichmacher umfaßt, ausgewählt aus der Gruppe bestehend aus Glycerin, Lecithin und Kombinationen davon.

13. Kaugummi nach einem der vorangehenden Ansprüche, wobei das sprühgetrocknete Wintergrün in einer Menge vorhanden ist, die ausreicht, um einen aktiven Aromagehalt von 0,30 bis 1,00 Gew.-% des Kaugummis zu ergeben.

14. Kaugummi nach einem der vorangehenden Ansprüche, wobei der sprühgetrocknete Wintergrün-Bestandteil in einer Menge vorhanden ist, die ausreicht, um einen aktiven Aromagehalt von 0,40 bis 0,80 Gew.-% des Kaugummis zu ergeben.

15. Kaugummi nach einem der vorangehenden Ansprüche, außerdem umfassend einen oder mehrere flüssige Aromastoffe, die in einer Menge von 0,05 bis 1,5 Gew.-% des Kaugummis vorhanden sind, zusätzlich zu dem sprühgetrockneten Aroma-Bestandteil.

16. Verfahren zum Herstellen eines abhäsiven Kaugummis mit Wintergrünaroma und hoher Aromaintensität, welcher frei von Antiklebemittel ist, umfassend die Schritte:
Sprühtrocknen eines Aroma-Bestandteils, der einen Wintergrün-Aromastoff umfaßt;
Herstellen einer nichtklebenden Kaugummibase;
Bereitstellen von einem oder mehreren Süßungsmitteln;
gründliches Vermischen des sprühgetrockneten Aroma-Bestandteils, der nichtklebenden Kaugummibase und des einen oder der mehreren Süßungsmittel, um eine abhäsive Kaugummimasse zu bilden, die umfaßt:
5 bis 95 Gew.-% der nichtklebenden Kaugummibase,
5 bis 95 Gew.-% von einem oder mehreren Süßungsmitteln, und eine ausreichende Menge des sprühgetrockneten Aroma-Bestandteils, um einen aktiven Aromagehalt von 0,10 bis 1,50 Gew.-% des Kaugummis zu verleihen;
wobei die nichtklebende Kaugummibase, bezogen auf des Gewicht der Kaugummibase, umfaßt:
10 bis 55 Gew.-% Polyvinylacetat; 15 bis 45 Gew.-% eines Elastomers, ausgewählt aus der Gruppe bestehend aus Polyisobutylen, Butylkautschuk, Polyisopren, Isobutylen-Isopren-Copolymer, Butadien-Styrol-Copolymer und Kombinationen davon;
5 bis 50 Gew.-% eines Weichmachers, ausgewählt aus der Gruppe bestehend aus hydrierten Pflanzenölen, teilweise hydrierten Pflanzenölen, tierischen Fetten, hydrierten und teilweise hydrierten tierischen Fetten und Kombinationen davon; und
5 bis 40 Gew.-% eines mineralischen Zusatzstoffes, ausgewählt aus der Gruppe bestehend aus Calciumcarbonat, Talk, Tricalciumphosphat und Kombinationen davon.

17. Verfahren nach Anspruch 16, wobei das Süßungsmittel ausgewählt ist aus der Gruppe bestehend aus Zucker-Süßungsmitteln, zuckerfreien Süßungsmitteln, hochwirksamen Süßungsmitteln und Kombinationen davon.

18. Verfahren nach Anspruch 16 oder Anspruch 17, außerdem umfassend die Schritte:
Bereitstellen eines zweiten Aromastoffes in einer Menge von 0,50 bis 1,5 Gew.-% des Kaugummis, und gründliches Vermischen des zweiten Aromastoffes mit dem sprühgetrockneten Aroma-Bestandteil, der nichtklebenden Kaugummibase und dem einen oder mehreren Süßungsmitteln.

## Revendications

1. Gomme à mâcher non collante ayant un arôme d'intensité élevée, aromatisée à la gaulthéria, qui est exempte d'agent anti-pégosité, comprenant :
de 5 à 95 % en poids d'une base de gomme à mâcher non collante ;
de 5 à 95 % en poids d'une partie de charge soluble dans l'eau, comprenant un ou plusieurs édulcorants ; et
un ingrédient arôme de gaulthéria séchée par pulvérisation, présent en une quantité suffisante pour conférer un taux d'arôme actif de 0,10 à 1,50 % en poids par rapport à la gomme à mâcher,
dans laquelle la base de gomme à mâcher non collante comprend, par rapport au poids de la base de gomme :
de 10 à 55 % en poids d'acétate de polyvinyle ;
de 15 à 45 % en poids d'un élastomère choisi dans l'ensemble constitué par le polyisobutylène, le butylcaoutchouc, le polyisoprène, un copolymère d'isobutylène-isoprène, un copolymère de butadiène-styrène et des combinaisons de ceux-ci ;
de 5 à 50 % en poids d'un émollient choisi dans l'ensemble constitué par des huiles végétales hydrogénées, des huiles végétales partiellement hydrogénées, des graisses animales, des graisses animales hydrogénées et des graisses animales partiellement hydrogénées, ainsi que des combinaisons de celles-ci ; et
de 5 à 40 % en poids d'un adjuvant minéral choisi dans l'ensemble constitué par le carbonate de calcium, le talc, le phosphate tricalcique et des combinaisons de ceux-ci.

2. Gomme à mâcher selon la revendication 1, dans laquelle l'élastomère comprend un mélange de polyisobutylène et de butylcaoutchouc selon un rapport d'environ trois parties en poids de polyisobutylène pour deux parties en poids de butylcaoutchouc.

3. Gomme à mâcher selon la revendication 1 ou la revendication 2, dans laquelle la base non collante comprend, en outre, un ou plusieurs acides gras présents en une quantité allant jusqu'à 20 % en poids par rapport à la base de gomme à mâcher non collante.

4. Gomme à mâcher selon l'une quelconque des revendications 1 à 3, dans laquelle la base non collante comprend, en outre, des glycérides d'acides gras présents en une quantité allant jusqu'à 10 % en poids par rapport à la base de gomme à mâcher non collante et choisis dans l'ensemble constitué par des monoglycérides, des diglycérides et des combinaisons de ceux-ci.

5. Gomme à mâcher selon l'une quelconque des revendications 1 à 4, dans laquelle la base de gomme à mâcher non collante comprend, en outre :
de 2 à 10 % en poids d'émulsifiant ; et
de 6 à 25 % en poids de résine terpénique.

6. Gomme à mâcher selon la revendication 5, dans laquelle l'émulsifiant comprend du monostéarate de glycérol.

7. Gomme à mâcher selon la revendication 5 ou la revendication 6, dans laquelle le terpène est choisi dans l'ensemble constitué par les alpha-terpène, bêta-terpène, limonène et des combinaisons de ceux-ci.

8. Gomme à mâcher selon l'une quelconque des revendications précédentes, dans laquelle la base de gomme à mâcher non collante comprend, en outre, jusqu'à 15 % en poids d'une cire choisie dans l'ensemble constitué par des cires naturelles, des cires de pétrole, des cires de paraffine, des cires microcristallines et une combinaison de celles-ci.

9. Gomme à mâcher selon l'une quelconque des revendications précédentes, dans laquelle la partie de charge comprend un ou plusieurs édulcorants à base de sucre choisis dans l'ensemble constitué par le saccharose, le dextrose, le maltose, la dextrine, le sucre interverti séché, le fructose, le lévulose, le galactose, des solides de sirop de maïs et des combinaisons de ceux-ci.

10. Gomme à mâcher selon l'une quelconque des revendications 1 à 8, dans laquelle la partie de charge comprend un ou plusieurs édulcorants sans sucre choisis dans l'ensemble constitué par le sorbitol, le mannitol, le xylitol, des hydrolysats hydrogénés d'amidon, le maltitol et des combinaisons de ceux-ci.

11. Gomme à mâcher selon l'une quelconque des revendications 1 à 8, dans laquelle la partie de charge comprend un ou plusieurs édulcorants d'intensité élevée choisis dans l'ensemble constitué par le Sucralose®, l'aspartame, des sels d'acésulfame, l'alitame, la saccharine et ses sels, l'acide cyclamique et ses sels, la glycyrrhizine, les dihydrochalcones, la thaumatine, la monelline et des combinaisons de ceux-ci.

12. Gomme à mâcher selon l'une quelconque des revendications 1 à 11, dans laquelle la partie de charge comprend, en outre, un émollient choisi dans l'ensemble constitué par le glycérol, la lécithine et des combinaisons de ceux-ci.

13. Gomme à mâcher selon l'une quelconque des revendications précédentes, dans laquelle la gaulthéria séchée par pulvérisation est présente en une quantité suffisante pour fournir un taux d'arôme actif de 0,30 à 1,00 % en poids par rapport à la gomme à mâcher.

14. Gomme à mâcher selon l'une quelconque des revendications précédentes, dans laquelle l'ingrédient gaulthéria séchée par pulvérisation est présent en une quantité suffisante pour fournir un taux d'arôme actif de 0,40 à 0,80 % en poids par rapport à la gomme à mâcher.

15. Gomme à mâcher selon l'une quelconque des revendications précédentes, comprenant, en outre, un ou plusieurs agents aromatisants liquides présents en une quantité de 0,05 à 1,5 % en poids par rapport à la gomme à mâcher, en plus de l'ingrédient aromatisant séché par pulvérisation.

16. Procédé de préparation d'une gomme à mâcher non collante ayant un arôme d'intensité élevée, aromatisée à la gaulthéria, qui est exempte d'agent anti-pégosité, comprenant les étapes consistant à :
sécher par pulvérisation un ingrédient aromatisant comprenant un agent aromatisant à base de gaulthéria ;
préparer une base de gomme à mâcher non collante ;
fournir un ou plusieurs édulcorants ; et
mélanger soigneusement ensemble l'ingrédient aromatisant séché par pulvérisation, la base de gomme à mâcher non collante et le ou les édulcorants pour former une masse de gomme à mâcher non collante comprenant de 5 à 95 % en poids de base de gomme à mâcher non collante, de 5 à 95 % en poids d'un ou plusieurs édulcorants, et l'ingrédient aromatisant séché par pulvérisation en une quantité suffisante pour conférer un taux d'arôme actif de 0,10 à 1,50 % en poids par rapport à la gomme à mâcher ;
dans lequel la base de gomme à mâcher non collante comprend, par rapport au poids de la base de gomme à mâcher :
de 10 à 55 % en poids d'acétate de polyvinyle ; de 15 à 45 % en poids d'un élastomère choisi dans l'ensemble constitué par le polyisobutylène, le butylcaoutchouc, le polyisoprène, un copolymère d'isobutylène-isoprène, un copolymère de butadiène-styrène et des combinaisons de ceux-ci ;
de 5 à 50 % en poids d'un émollient choisi dans l'ensemble constitué par des huiles végétales hydrogénées, des huiles végétales partiellement hydrogénées, des graisses animales, des graisses animales hydrogénées et des graisses animales partiellement hydrogénées, ainsi que des combinaisons de celles-ci ;
et de 5 à 40 % en poids d'un adjuvant minéral choisi dans l'ensemble constitué par le carbonate de calcium, le talc, le phosphate tricalcique et des combinaisons de ceux-ci.

17. Procédé selon la revendication 16, dans lequel on choisit l'édulcorant dans l'ensemble constitué par des édulcorants à base de sucre, des édulcorants sans sucre, des édulcorants d'intensité élevée et des combinaisons de ceux-ci.

18. Procédé selon la revendication 16 ou la revendication 17, comprenant, en outre, les étapes consistant à fournir un second agent aromatisant en une quantité de 0,50 à 1,5 % en poids par rapport à la gomme à mâcher et à mélanger soigneusement le second agent aromatisant avec l'ingrédient aromatisant séché par pulvérisation, la base de gomme à mâcher non collante et le ou les édulcorants.
